# EUROPÄISCHE PATENTSCHRIFT

(11) **EP 1 816 174 B1**
(45) Veröffentlichungstag und Bekanntmachung des Hinweises auf die Patenterteilung: **01.05.2013**
(21) Anmeldenummer: 06021915.1
(22) Anmeldetag: 19.10.2006
(51) Int. Cl.: C09J 7/02, C09J 167/04

(54) **Biologisch abbaubare Klebefolie auf der Basis von nachwachsenden Rohstoffen**
Biodegradable adhesive film based on renewable raw materials
Film adhésif biodégradable à base de matières premières renouvelables

(30) Priorität: 01.02.2006 DE 202006001693 U
(43) Veröffentlichungstag der Anmeldung: 08.08.2007
(73) Patentinhaber: Logo tape Gesellschaft für Selbstklebebänder GmbH & Co. KG, 24955 Harrislee (DE)
(72) Erfinder: Wesselmann, Ulrich, Dr., 24960 Glücksburg (DE); Möller, Michael, 24969 Grossenwihe (DE); Christiansen, Freya, 24937 Flensburg (DE)
(74) Vertreter: Lobemeier, Martin Landolf

(56) Entgegenhaltungen:
- EP-A- 0 980 894
- DE-A1-102005 004 789
- JP-A- 2004 331 904
- US-A1- 2004 005 136

## Beschreibung

Die Erfindung betrifft eine biologisch abbaubare Klebefolie, die insbesondere bedruckbar und als Etikett oder als Klebeband zur Kennzeichnung speziell von biologisch abbaubaren Verpackungen geeignet ist. Dabei soll die Klebefolie nicht nur biologisch abbaubar, sondern auch aus nachwachsenden Rohstoffen hergestellt sein. Weiterhin betrifft die Erfindung eine auf die Klebefolie abgestimmte Klebmassenbeschichtung.

Biodegradierbare Klebebänder sind beispielsweise aus der JP2004 331 904 A und der EP 0 980 894 A1 bekannt.

Ein Problem bei der Kompostierung biologisch abbaubarer Verpackungen besteht oftmals darin, dass zwar die Verpackung selbst, nicht aber die mit der Verpackung verbundenen Etiketten abbaubar sind. So werden beispielsweise zur Verpackung von Lebensmitteln regelmä-βig biologisch abbaubare Formteile verwendet, die durch Thermoformen, auch Warmumformen oder Tiefziehen genannt, hergestellt werden. Zur Kennzeichnung dieser Verpackungen wäre es besonders vorteilhaft, diese Verpackungen vor dem Thermoformen mit einem Selbstklebefolien, auf dem beispielsweise ein durch Scannerkassen auslesbarer EAN-Code aufgedruckt ist, zu versehen. Da sich aber bekannte Selbstklebefolien nur in geringem Maße thermoformen lassen, muss man insbesondere bei tiefen Verpackungen, bei denen eine hohe Thermoverformbarkeit des verwendeten Materials erforderlich wäre, auf ein Anbringen von Etiketten ausweichen, die in der Regel nicht vollständig biologisch abbaubar sind.

Bei der Herstellung thermoverformbarer Selbstklebefolien besteht nämlich das Problem, dass diese einerseits für eine gute Thermoverformbarkeit temperaturempfindlich sein müssten, andererseits aber zur Beschichtung der Folie mit Klebemasse hohe Temperaturen zur Trocknung des Klebers benötigt werden. Die an die verwendeten Materialien und die am Herstellungs- und Verarbeitungsprozess beteiligten Maschinen gestellten Anforderungen sind entsprechend hoch. Insbesondere konnten die dafür erforderlichen mechanischen Eigenschaften mit biologisch abbaubaren Materialien aus nachwachsenden Rohstoffen bisher nicht erreicht werden. Die Verwendung von nachwachsenden Rohstoffen im Verpackungsbereich jedoch ist angesichts des steigenden Verpackungsaufkommens und der zugleich schwindenden Reserven an Rohölvorkommen ein dringliches Ziel.

Bezüglich der bei Klebefolien verwendeten Klebstoffe sind bereits mehrere Substanzen bekannt, die aus nachwachsenden Rohstoffen hergestellt werden können bzw. an natürlich vorkommende Substanzen angelehnte oder von diesen abgeleitete biologisch abbaubare Substanzen darstellen. Dieses sind Proteine (z.B. Elastin, Fibronektin, Fibrinogen, Keratin, Kollagen, Laminin), Polysaccharide (z.B. Stärke, Zellulose, Gummi arabicum), Polyphenole (z.B. Lignin) und Lipide (z.B. Terpene) oder Verbindungen aus diesen. Dabei liegt die Klebkraft der natürlichen Klebstoffe im Schertest in der Größenordnung von 10 - 14 MPa und ist mit derjenigen von synthetischen Klebstoffen vergleichbar.

Der Vorteil bei einer Verwendung von nachwachsenden Rohstoffen gegenüber synthetischen Polymeren als Klebstoffe, insbesondere Polysaccharide, Zellulose und Stärke, besteht darin, dass diese Stoffe bei anderen Verfahren oftmals als Nebenprodukte anfallen und damit kostengünstig zu erwerben sind.

Aufgabe der Erfindung ist es deshalb, eine biologisch abbaubare Klebefolie mit einer guten Thermoverformbarkeit zu schaffen, wobei die Klebefolie als auch die Klebebeschichtung aus nachwachsenden Rohstoffen hergestellt ist. Dabei soll die Folie bedruckbar sein und sich als Aufkleber insbesondere zur Kennzeichnung von biologisch abbaubaren Verpackungen eignen.

Die Aufgabe wird gelöst durch die biologisch abbaubare Klebefolie mit den Merkmalen von Anspruch 1. Die Unteransprüche geben vorteilhafte Ausgestaltungen der Erfindung wieder.

Die erfindungsgemäße biologisch abbaubare Klebefolie wird auf der Basis von nachwachsenden Rohstoffen bereitgestellt, mit Polymeren auf der Basis von Polymilchsäure (PLA) und Zuschlagsstoffen, wobei im Basismaterial ein Weichmacher beigemengt ist, mit einem Polymer aus 3,6-Dimethyl-1,4-dioxan-2,5-dion mit einem Polymerisationsgrad von 700 bis 15.000, einem aromatisch aliphatischen Copolyester mit einem Grundgerüst aus Diolen, aliphatischen Carbonsäuren und aromatischen Carbonsäuren zur Erhöhung der Bruchdehnung der Klebefolie, 6 - 20 Gew.-% eines mineralischen Zuschlagstoffs zur Regulierung der Tiefzieheigenschaften der Klebefolie, und einer einseitig auf die biologisch abbaubare Folie aufgebrachten Klebemasse, die mit einem Haftverbesserer zur Ermöglichung eines Aufwickelns der Klebefolie nach Trocknung und Kühlung bei der Erstellung von später zu Klebebandrollen zerschnittenen Folienballen unterlegt ist. Vorteilhaft ist, überwiegend das Polymer und 10 - 50% des Copolyesters zu verwenden, insbesondere hat sich eine 60:30:10 Mischung mit jeweils bis zu +/-5% Gew.Prozent Abweichungen bei den Bestandteilen Polymer, Copolyester und Zuschlagsstoff für die Lösung der Aufgabe als vorteilhaft herausgestellt.

Die vorgeschlagene Klebefolie besteht erfindungsgemäß aus nachwachsenden Rohstoffen, ist biologisch abbaubar und weist eine gute Thermoverformbarkeit auf. Sie ist darüber hinaus nicht nur biologisch abbaubar, sondern aufgrund des hydroxylgruppenhaltigen Copolymers auch kompostierbar, d.h. der biologische Abbau wird sehr schnell, nämlich innerhalb eines Kompostzyklus vollzogen.

Die Verwendung von "Polymilchsäure" zur Herstellung von Folien ist bereits seit längerem bekannt. Da aber bei der klassisch durchgeführten Polymerisation von L- und D-Milchsäure nur geringe Molmassen von bis zu 5000 g/mol erreicht werden, wodurch die gewünschten mechanischen Eigenschaften des Polymers nicht erbracht werden können, erfolgt die Herstellung erfindungsgemäß über eine katalytische Ringöffnungspolymerisation von Lactid (3,6-Dimethyl-1,4-dioxan-2,5), dem Dilacton der Milchsäure, durch einen geeigneten Katalysator, z.B. Lewissäure. Auf diese Weise können hochmolekulare Polymere entstehen, die insbesondere auch einen Polymerisationsgrad von 700 bis 15.000 aufweisen können.

Aus den verschiedenen Milchsäuren lassen sich unterschiedliche Lactide herstellen. Durch die Variation der Polymerisationsbedingungen (z.B. der Zeit) lassen sich aus einer begrenzten Anzahl von Monomeren eine Vielzahl von unterschiedlichen Zusammensetzungen erstellen. Somit können gewünschte Eigenschaften des Endproduktes mit der Wahl der eingesetzten Monomere und den Polymerisationsbedingungen erreicht werden.

Bei der Trägerfolie wird neben den üblichen Zug- und Wiegeeigenschaften für Folien, insbesondere für Etiketten und Trennfolien (beispielsweise zur Trennung zweier Lagen von Klebefolie) eine möglichst hohe mechanische Festigkeit gewünscht. Dennoch soll die Zähigkeit ausreichen, um in Tiefziehverfahren die Folie zu verformen, nachdem sie beispielsweise auf einer Aufschnittverpackung für Wurst- oder Käsescheiben aufgebracht wurde.

Hierbei wird vorgeschlagen, eine Mischung aus Polymilchsäure (PLA) mit dem - unter dem Handelsnamen Ecoflex (BASF) erhältlichen - Copolymermaterial (einer Mischung aus aliphatischen Diolen, aliphatischen und aromatischen Dicarbonsäuren) im Verhältnis von 50:50 bis zu einem Mischungsverhältnis von 1/3 Ecoflex zu 2/3 PLA vorzusehen. Insbesondere durch die weitere Zugabe von mineralischen Additiven, wie Kreide und Talkum, verbessert sich die Temperaturstandfestigkeit und die Kerbschlagzähigkeit sowie die Oberflächengüte.

Dabei verbessert Talkum insbesondere auch das E-Modul, die Biegefestigkeit und die Schlagfähigkeit, wenn es mit einem Zusatz von jeweils 6 % bis 10 % zugesetzt wird. Dabei kann ein Zuschlagsstoff mit insgesamt 6 % oder mehrere Zuschlagsstoffe mit insgesamt 20 % beigegeben werden. Verwendet wird dabei eine Polymilchsäure, wie sie beispielsweise von der Firma Cargill Dow vertrieben wird.

Bevorzugt werden Feststoffbeigaben von sowohl Kreide wie Talkum mit gleichen Anteilen, die wiederum jeweils 7 - 10 Gew.-% ausmachen. Als besonders bevorzugt hat sich ein "Blend" aus einer Blendkomponente Ecoflex mit PLA und einem Feststoffanteil von jeweils 9 % zweier mineralischen Additive, nämlich Kreide und Talkum, herausgestellt.

Der Anteil an Ecoflex kann von einem Viertel bis zu der Hälfte des Gewichtsanteils von PLA betragen. Bevorzugt ist ein Blend mit einem 25 - 40 Gew.-% Ecoflex als Copolymer.

Das Blending selbst wird unter Zugabe von Weichmachern, die die Zähigkeit der harten Kunststoffe, wie in der Technik üblich, einstellen und Kopplern durchgeführt, die die Verträglichkeit der einzelnen Komponenten untereinander verbessern. Dadurch sinkt der Anteil von PLA, sodass ein bevorzugtes Basismaterial (ohne mineralische Feststoffe) 65 - 80 % PLA aufweist.

Durch den Zusatz von mineralischen Additiven wie Kreide oder Talkum, verbessern sich nun insbesondere die Temperaturstandfestigkeit, die Kerbschlagzähigkeit und die Oberflächengüte. Bei der Hinzugabe von Talkum wird zudem das E-Modul, die Biegefestigkeit und die Schlagfähigkeit verbessert.

Bei 34 %-iger Mischung Ecoflex mit PLA hat sich eine gleichzeitige Gabe von Talkum und Kreide als besonders bevorzugt herausgestellt, bei einer 44 %-igen Mischung Ecoflex/PLA ist die alleinige Gabe von Talkum vorzuziehen.

Die Herstellung des erfindungsgemäßen Tiefziehklebebandes wird mit üblichen Verfahren gewährleistet. Die eventuell aufgebrachte Lackierung und Bedruckung erfolgt an handelsüblichen Maschinen im z.B. Flexo- Offset-, Sieb-, Tief-, oder UV-Flexodruck. Die eventuelle Bedruckung kann einfarbig oder mehrfarbig ausfallen. Eventuell kann die Bedruckung auch im Konterdruck aufgebracht werden.

Die eventuell aufgetragene Druckfarbe kann Pigmente natürlichen Ursprungs enthalten und aus einem Bindemittel wie Nitrocellulose bestehen. Es besteht aber auch die Möglichkeit, die Folie mit natürlichen Farben einzufärben.

Die Beschichtung erfolgt an handelsüblichen Beschichtungsmaschinen. Erst nach dem Beschichten werden die zunächst breiten Folienbahnen auf geringere Breiten aufgeschnitten. Das Aufschneiden der Bahnen erfolgt an handelsüblichen Schneidmaschinen. Die so erzeugeten Bänder lassen sich dann problemlos auf handelsüblichen Tiefziehanlage thermoformen und gehen durch das gemeinsame Tiefziehen mit der Verpackung eine feste Verbindung ein.

Auch die auf der Folie aufzubringende Klebemasse muss biologisch abbaubar und im wesentlichen aus nachwachsenden Rohstoffen hergestellt sein, um den gewünschten Anforderungen zu entsprechen. Als Lösungsmittel wird Wasser bevorzugt. Zur Beschichtung sollte die Klebemasse pumpfähig sein und eine gewisse Scherfestigkeit haben, sodass sie durch die Pump-und Fördervorgänge nicht geschädigt wird.

Haftklebstoffe, darunter auch lineare Polyester, sind in der Literatur mit der allgemeinen Zusammensetzung

| | |
|---|---|
| 10 - 30% | Weichmacher |
| 20 - 40% | klebrig machende Harze |
| 0 - 10 % | Füllstoffe |
| 1 - 2 % | Stabilisatoren |
| Rest | Polymerrückgrad |

beschrieben.

Zur Erzielung einer prinzipiell brauchbaren Klebemasse wird nun daher weiter erfindungsgemäß vorgeschlagen, die auf PLA und epoxidierten Sojabohnenöl basierenden klebrigen viskosen/hochviskosen oder pastösen Massen mit PLA zur Erzielung von Kohäsion abzumischen. Als Vorversuch wurde daher die bis dato hergestellten klebrigen Massen zusammengeführt, verflüssigt, mit PLA und einigen Prozent (< 10 % wg. Abbaubarkeit) klassischer Harze abgemischt und durch ein 150M Filter filtriert. Das noch heiße Produkt weist prinzipiell interessante Eigenschaften auf (auf Deckglas gegeben, mit Papier versehen; Papier zeigt Kohäsionsbruch). Im erkalteten Zustand weist es aber einen "Hot Melt" Charakter auf. Dies ist durch das zugegebene hochmolekulare PLA bedingt.

Ein besonderer Ansatz zeichnet sich durch 20 g PLA, 30 g PBS (biologisch abbaubarer Polyester mit Glaspunkt von -10 °C bis -40 °C), 21,9 g epox. Sojaöl, 3,1 g DBE und einem Zusatz von 6,9g Zitronensäure zur Kettenvernetzung hydroylterminierter Ketten und zur Erhöhung des Molekulargewichts aus. PEG als Alkoholkomponente kann in verschiedenen Formen (PEG 400, 600, 4000) zur Erreichung einer Verteilung der Segmentlängen (also zur Verringerung der Kristallisation) beigegeben sein mit Mengen von 0,25 g bis 10 g.

Bei Beigabe von 6,3 g PEG 400, und jeweils 0,75 g PEG 600 und PEG 400, bei gleichzeitiger Gabe von Span 80 (Sorbitanmono-olet, E494) mit 3 - 4 g ergibt sich ein bei höherer Temperatur klebriges Material mit folgenden Spezifika (Material 1):

| OH-Zahl | Funtionalität | Mg | Mw | Polym. grad x_{P} |
|---|---|---|---|---|
| ca. 120-160 | 2,4-2,45 | ca. 162 | 358-360 | ca. 18 |

Das Material vertrübt (kristallisiert) erst nach Wochen und kann ohne Substratbruch mehrfach von Papier zu Papier repositioniert werden.

Zur Verfeinerung des noch unfertigen Produkts wird die klebrige Masse erhitzt, 30 g PLA zur Steigerung der Kohäsion hinzugefügt, da ansonsten die Masse schlecht rührbar ist, dann 4,8 g DEG hinzugefügt. Der PLA-Anteil macht dann ca. 68 % aus, epox. Soja ca. 13 %, DEG ca. 8 % Alkohole ca. 2 %, Harze ca. 8 %.

Es ergibt sich eine stark pastöse/feste Masse mit kohäsiven Eigenschaften. Die Klebrigkeit ist bei Raumtemperatur noch etwas verbesserungswürdig.

Zur Erzielung einer besseren Kohäsion bei zugleich geringeren "Hot Melt" Charakter wurde daher nun das zu Verfügung stehende PLA mit DEG zur Erzielung geringerer Polymerisationsgrade umgesetzt. Ferner wurden drei weitere klebrige Massen hergestellt (siehe unten). Diese sollten neben der klebrigen Eigenschaft zugleich als Weichmacher dienen.

### Vorgeschlagener Haftklebstoff:

4,6 g aus dem letzten Ansatz und 3,2 g PLA Qualität 1 (OHZ 92), beide vermengt, soll als (leicht klebriger) Weichmacher dienen. Weiter werden 9,4 g aus dem vorletzten Ansatz, der als Klebmasse dienen soll werden zu Weichmacher hinzugefügt, eingeknetet (händisch) schließlich noch 9,7 g PLA Qualität 2 (OHZ 48) erhitzt (bis stark zähflüssig), mit obigen Massen vermengt, (mit Spatel händisch) ergibt eine klebrige Masse mit deutlicher besserer, aber noch nicht ausreichender Kohäsion.

2,3 g PLA Qualität 3 (OHZ 34) erhitzt (bis stark zähflüssig), auf abgekühlte Rohmasse getropft und vermengt (inhomogen, da Rohmasse schon zu kalt war), ergab dann eine ausreichende (nochmals verbesserte) Kohäsion in den Bereichen der inhomogenen Anbindung.

Material 2 weist daher folgende Charakteristika auf:

| OH-Zahl | Funktionalität | Mg | Mw | Polym. grad x_{P} |
|---|---|---|---|---|
| ca. 73 | 2,07 | 193 | 573 | 18 |

Für bessere Anbindung und verbesserte Kohäsion wurden daher weitere 5,7 g PLA Qualität 3 (OHZ 34) bis zur Zähflüssigkeit erhitzt, und auf die wieder verflüssigte Rohmasse gegeben und vermengt: Die Klebmasse verändert dann aber plötzlich ihren Charakter hin zu einer eher wachsigen schwach klebrigen Masse mit. Vermutlich ist die Gleichgewichtseinstellung des Rückgradpolymers mit dem Weichmacher, durch zu hohe Temperaturen und zu viel aktiven Katalysator in der Masse und/oder Phasenentmischungen nicht gelungen.

Material 3 weist dabei folgende Charakteristika auf:

| OH-Zahl | Funktionalität | Mg | Mw | Polym.grad x_{P} |
|---|---|---|---|---|
| ca. 67 | 2,06 | 174 | 538 | 20 |

Ein alternativer (neuer) Ansatz klebriger Masse weist auf :
PLA 100 g (60,6 %)
epox. Soja 25 g (15,2 %)
PEG 400 40 g (24,2 %)
TBT 0,5 g

Dieses Material 4 weist folgende Charakteristika auf:

| OH-Zahl | Funktionalität | Mg | Mw | Polym.grad x_{P} |
|---|---|---|---|---|
| ca. 71 | 2,14 | 282 | 620 | 15 |

Nun wurden 22,3 g PEG 400 und 40 g PLA vorgelegt. Dabei steigt die Temperatur von ca. 180 °C kurzfristig auf 250 °C, es ergibt sich eine Dunkelfärbung, nach 1,5 h 22,5 g epox. Soja und TBT hinzugefügt, nach 1 h die Reste zugegeben, weitere 4,5 h gerührt, bis sich nun eine hochviskose klebrige Masse mit geringen kohäsiven Eigenschaften ergibt.

Ein dritter Ansatz klebriger Masse weist auf
PLA 32 g (52,9 %)
epox. Soja 20,7 g (34,2 %)
DEG 7,8 g (12,9 %)
TBT 0,3 g

Dieses Material 5 weist folgende Charakteristika auf:

| OH-Zahl | Funktionalität | Mg | Mw | Polym.grad x_{P} |
|---|---|---|---|---|
| ca. 143 | 2,33 | 371 | 816 | 8 |

10 g epox. Soja und 10 g PLA vorgelegt; Temp unter 200 °C; DEG in zwei Portionen hinzugefügt anschließend 10 g PLA, nach 1 h Rest PLA und epox. Soja ergab ein Material, das leicht orange gefärbt und nicht pastös ist. Es ist klebrig, keine kohäsiven Anteile, ein hoher Vernetzungsgrad führt nicht zu pastösen Eigenschaften.

Schließlich wurde ein vierter Ansatz klebriger Masse mit:
PLA 18,3 g (40,9 %)
epox. Soja 15,4 g (34,5 %)
PEG 400 11 g (24,6 %)
TBT 0,3 g
gemischt.

Material 6 weist dann folgende Charakteristika auf:

| OH-Zahl | Funktionalität | Mg | Mw | Polym.grad x_{P} |
|---|---|---|---|---|
| ca. 56 | 2,53 | 457 | 763 | 9 |

Dabei wurde PEG 400 und 5 g PLA vorgelegt, erhitzt und nach 0,5 h 10 g PLA hinzugefügt, nach weiteren 0,5 h epox. Soja in drei Schüben hinzugefügt nach 1 h Rest PLA. Die Temperatur war zwischenzeitlich zu hoch, sodass Dunkelfärbung eintrat. Dennoch kann ein Material ähnlich wie Material 4 erreicht werden.

Die letzten drei Formulierungen weisen modifizierte PLA Rohstoffbasis auf, um das Molekulargewicht zu verringern :

### Material 7:

140 g PLA, 60 g DEG, 30 g DBE , 2 g Kat. In 2 weiteren Schritten 460 g PLA hinzugefügt ca. 3 h, gerührt bei 190 °C. Das (Zwischen-) Produkt in Beispiel 7 ist wachsig, verreibbar.

Material 7 weist folgende Charakteristika auf:

| OH-Zahl | Funktionalität | Mg | Mw | Polym.grad x_{P} |
|---|---|---|---|---|
| ca. 92 | 2 | 79 | | 16 |

Eine weitere Bearbeitung mit weiteren 380 g PLA versetzt, und 2 h gerührt bei 200 °C ergab eine Masse (Material 8), die fest ist und elastisch in dünneren Schichten.

Material 8 weist folgende Charakteristika auf:

| OH-Zahl | Funktionalität | Mg | Mw | Polym.grad x_{P} |
|---|---|---|---|---|
| ca. 48 | 2 | 76 | | 31 |

Den Rest nun wieder mit weiteren 200 g PLA versetzt, 1,5 h gerührt bei 210 °C ergab eine Masse (Material 9), die fest und hart ist und in sehr dünneren Schichten leichte Elastizität aufweist.

Material 9 weist folgende Charakteristika auf:

| OH-Zahl | Funktionalität | Mg | Mw | Polym.grad x_{P} |
|---|---|---|---|---|
| ca. 34 | 2 | 75 | | 44 |

Die beispielhaft aufgeführten Verbindungen weisen eine gleichmäßige Viskosität auf, die für einen gleichmäßigen Klebmassenauftrag mitentscheidend ist. Insbesondere jedoch sollte mit dem gewählten Material für die Folie eine gute Klebverbindung eingegangen werden, wobei auch schon die Anfangsklebkraft (das sogenannte Tack) hoch genug sein soll, um Kartonagen sicher zu verschließen, auch wenn es sich um Kartons mit hoher Deckelspannung handelt. Schließlich sollte nach der Verarbeitung eine Lagerzeit von 1 - 2 Jahren ohne Qualitätsverlust möglich sein und die Klebmasse muss über einen längeren Zeitraum die Verklebung sichern und Alterungsstabilität aufweisen. Sie darf sich insbesondere durch Wärmeeinwirkung nicht zersetzen.

Bei Darbietung als Klebebandrolle wird vorgeschlagen, die Rückseite zur Vermeidung von Wechselwirkungen zwischen der Folie und der Klebemasse mit einem Trennmittel, z. B. einem Lack oder einem Release zu behandeln. Es kann jedoch auch eine Trennfolie eingelegt werden, die ebenfalls aus biologisch abbaubarer Folie mit doppelseitiger Behandlung mit geringen Trennkräften versehen ist.

Umgekehrt ist die Folie dort, wo sie mit der Klebemasse verbunden bleiben soll, erfindungsgemäβ mit einem Haftverbesserer behandelt. Dieses kann nach physikalischem Wege mittels einer Koronaentladung oder auf chemischen Wege durch Aufbringen eines Primers, eines Haftverbesserers verfolgen. Bei Einsatz eines Haftverbesserers sollte dieser so gewählt werden, dass das enthaltene Lösungsmittel durch Wärme verdampft werden kann.

Das Beschichten der Folie mit der Klebemasse zur Herstellung einer als Bandmaterial für bedruckbare Bänder vorgesehene Klebfolie teilt sich in zwei wesentliche Arbeitsgänge auf. Dem Aufbringen der Klebemasse und dem Trocknen der Klebemasse. Die Klebemasse muss als Lösungsmittel Wasser enthalten und zur Beschichtung geeignet sein, d. h. sie muss pumpfähig sein und eine gewisse Scherfestigkeit haben, wobei gleichzeitig sichergestellt werden muss, dass die Folie wiederum gegen das in der Klebmasse enthaltene Wasser beständig ist und nicht aufweicht oder so in ihrem Wasserhaushalt verändert wird, dass sie sich durch Wasseraufnahme an den Rändern einrollt.

Bei der Trocknung wird das in der Klebmasse enthaltene Lösemittel durch Warmluft verdampft, wobei das Temperaturprofil und die eingesetzte Luftmenge von entscheidender Bedeutung sind. Bei zu hohen Temperaturen oder zu großer Verweilzeit im Trockenkanal kann die Folie schrumpfen. Weiter ist eine einseitige Trocknung der Folie möglich, wenn die Folie ein hohes Aufnahmevermögen für Wasser hat. In diesem Fall kann eine Rückbefeuchtung durchgeführt werden.

Nach erfolgter Trocknung muss das Klebeband wieder auf Raumtemperatur heruntergekühlt werden, bevor man es aufwickelt. Die Kühlung muss schonend erfolgen, um ein Verspannen des Materials durch starke Temperaturwechsel zu vermeiden.

Die derart hergestellten Folienballen werden durch Umspulen mit integriertem Längsschneider zu Rollen in der gewünschten Breite aufgeschnitten. Gegebenenfalls kann eine Laminierung von Klebeband auf eine Trennfolie erfolgen. Der anschließende Bänderdruck kann beispielsweise im Flexodruck mit UV-Trocknung erfolgen, wobei die Oberfläche des Materials gegebenenfalls mit einem Haftvermittler noch vorbehandelt werden kann und der Druck, wenn gewünscht, noch mit einer Schutzlackierung versehen werden kann.

Für die Klebmassenbeschichtung können neben Talkum und Kreide als mineralische Zuschlagstoffe auch noch andere Zuschlagstoffe eingesetzt werden. Im übrigen basiert der Kleber auf der Basis von durch ringöffnende Polymerisation von Lactonen oder Polykondensationen von Hydroxycarbonsäuren hergestellten Copolyesters, insbesondere der Hydroxybutyrat- oder Hydroxyvalerat-Polyester.

Alternativ kann aber auch ein Kleber auf der Basis von Naturlatex in Form von Latexmilch, die auf wässriger Basis mit Kollophonium zu einem 20 - 60 (bevorzugt 40 - 50) Gew.-% ausmachenden Feststoff-Anteil vermischt ist, Verwendung finden. Auch ein Kleber auf Naturharzbasis ist neben Klebern auf der Basis von Latexmilch (Naturlatex) möglich.

Für den Fall der Erstellung von Bandwickel wird vorgeschlagen, einseitig durch Coronaentladung zur Haftverbesserung der Oberfläche der Trägerfolie dort beizutragen, wo Klebmasse aufgetragen, die dann ihrerseits an der Oberfläche und/oder UV-gehärtet wird, um zu bewirken, dass sie besser an der zugehörigen Trägerfolie und nicht etwa an der nächsten Wickelschicht haftet. Falls benötigt kann dies jedoch auch durch ein Trennmittel zwischen der nicht behandelten Seite der Trägerfolie und der gehärteten oder getrockneten Oberfläche der Klebermasse auch erreicht oder gefördert werden. Das Trennmittel kann eine auf der der haftverbesserten Seite der Trägerfolie gegenüberliegenden Seite der Trägerfolie aufgebrachte haftvermindernde Schicht, z.B. eine Releaseschicht aus natürlichen Wachsen, oder eine ebenfalls biologisch abbaubare separate Trennfolie zur Trennung zweier Schichten von Klebefolie sein, die mit einer Beschichtung auf wenigstens einer, der dem Kleber zugewandten Seite versehen ist.

### Beispiel 1

Es wurde eine Flachfolie bestehend aus einem Gemisch von Polylactid und aromatischaliphatischem Copolyester in einem Verhältnis von 2:1 in einer Dicke von 50 µm und in einer Breite von 530 mm einfarbig mit einer biologisch abbaubaren Farbe bedruckt. Die bedruckte Seite wurde dann mit einer Klebmasse aus aliphatischem Copolyester beschichtet. Die Beschichtung erfolgte mit einer Geschwindigkeit von 50 m/min und Trockentemperaturen in sieben aufeinander folgenden Trockenzonen mit Temperaturen von 65 °C, 75 °C, 80 °C, 85 °C, 85 °C, 75 °C und 65 °C. Dabei wurde auf eine faltenfreie Aufwicklung geachtet.

Die Folie der Breite von 530 mm wurde in 13 Bahnen zu je 36 mm geschnitten und jeweils mit einer Länge von 990 m gewickelt.

### Beispiel 2 (nicht erfindungsgemäβ)

Eine rot eingefärbte Celluloseacetatfolie mit einer Breite von 350 mm und einer Dicke von 30 µm wurde mit einer weiß pigmentierten Klebmasse aus Latexmilch beschichtet. Die Beschichtung erfolgte mit einer Geschwindigkeit von 70 m/min und Trockentemperaturen in sieben aufeinander folgenden Trockenzonen mit Temperaturen von 70 °C, 85 °C, 90 °C, 100 °C, 100 °C, 90 °C und 75 °C.

Die Folie der Breite von 350 mm wurde in 15 Bahnen zu je 20 mm geschnitten und jeweils in Kreuzspulenwicklung mit einer Länge von 2000 m aufgespult.

## Patentansprüche

1. Biologisch abbaubare Klebefolie auf der Basis von nachwachsenden Rohstoffen, mit Polymeren auf der Basis von Polymilchsäure (PLA) und Zuschlagsstoffen, wobei im Basismaterial ein Weichmacher beigemengt ist,
**gekennzeichnet durch**
ein Polymer aus 3,6-Dimethyl-1,4-dioxan-2,5-dion mit einem Polymerisationsgrad von 700 bis 15.000,
ein aromatisch aliphatisches Copolyester mit einem Grundgerüst aus Diolen, aliphatischen Carbonsäuren und aromatischen Carbonsäuren zur Erhöhung der Bruchdehnung der Klebefolie und
6 - 20 Gew.-% eines mineralischen Zuschlagstoffs zur Regulierung der Tiefzieheigenschaften der Klebefolie,
einer einseitig auf die biologisch abbaubare Folie aufgebrachten Klebemasse, die mit einem Haftverbesserer zur Ermöglichung eines Aufwickelns der Klebefolie nach Trocknung und Kühlung bei der Erstellung von später zu Klebebandrollen zerschnittenen Folienballen unterlegt ist.

2. Biologisch abbaubare Klebefolie nach einem der vorhergehenden Ansprüche, **gekennzeichnet durch** weitere Zuschlagstoffe, Koppler, Modifikatoren und/oder Plastifikatoren.

3. Biologisch abbaubare Klebefolie nach einem der vorhergehenden Ansprüche, **gekennzeichnet durch** Talkum als einen mineralischen Zuschlagstoff und/oder CaCO₃ als weiterem mineralischen Zuschlagstoff mit jeweils 6 - 10 %.

4. Biologisch abbaubare Klebefolie nach einem der vorhergehenden Ansprüche, **gekennzeichnet durch** eine Klebmassenbeschichtung auf der Basis von Naturlatex in Form von Latexmilch, die auf wässriger Basis mit Kollophonium zu einem 20 - 60 Gew.-% ausmachenden Feststoff Anteil vermischt ist.

5. Biologisch abbaubare Klebefolie nach einem der Ansprüche 1 bis 4, **gekennzeichnet durch** eine Klebmassenbeschichtung aus aliphatischem Copolyester.

6. Biologisch abbaubare Klebefolie nach Anspruch 6, **dadurch gekennzeichnet, dass** die Klebmassenbeschichtung epoxidiertes Sojabohnenöl enthält.

7. Biologisch abbaubare Klebefolie nach Anspruch 6 oder 7, **dadurch gekennzeichnet, dass** die Klebmassenbeschichtung DEG enthält.

8. Biologisch abbaubare Klebefolie nach einem der vorhergehenden Ansprüche, **dadurch gekennzeichnet, dass** die Klebefolie mit einer Release-Schicht aus natürlichen Wachsen bedeckt ist.

## Claims

1. A biodegradable adhesive film based on renewable materials, having polymers based on poly(lactic acid) (PLA) and loading materials, a plasticizer being added to the base material,
**characterized by**
a polymer made from 3,6-dimethyl-1,4-dioxane-2,5-dione having a degree of polymerization of 700 to 15000,
an aromatic-aliphatic copolyester having a parent structure of diolene, aliphatic carboxylic acids, and aromatic carboxylic acids for increasing the strain at break of the adhesive tape, and
6 - 20 wt.% of a mineral loading material to control the deep-drawing properties of the adhesive film,
an adhesive compound applied to one side of the biodegradable film below which there is an adhesion promoter to enable winding up the adhesive film after drying and cooling when producing film bales to be cut later to adhesive tape rolls.

2. The biodegradable adhesive film according to one of the preceding claims, **characterized by** further loading materials, couplers, modifiers, and/or plasticizers.

3. The biodegradable adhesive film according to one of the preceding claims, **characterized by** talcum as a mineral loading materal and/or CaCO₃ as further mineral loading material having in each case 6 - 10%.

4. The biodegradable adhesive film according to one of the preceding Claims, **characterized by** an adhesive compound coating based on natural-rubber latex in the shape of latex milk that is blended on an aqueous base with rosin to a solids fraction of 20 - 60 wt.%.

5. The biodegradable adhesive film according to one of Claims I to 4, **characterized by** an adhesive compound coating from aliphatic copolyester.

6. The biodegradable adhesive film according to Claim 6, **characterized in that** the adhesive compound coating contains epoxidized soy bean oil.

7. The biodegradable adhesive film according to Claim 6 or 7, **characterized in that** the adhesive compound coating contains DEG.

8. The biodegradable adhesive film according to one of the preceding claims, **characterized in that** the adhesive film is covered by a release layer from natural waxes.

## Revendications

1. Feuille adhésive biodégradable sur la base de matières premières renouvelables, avec des polymères sur la base d'acide polylactique (PLA) et d'agrégats, étant entendu qu'un plastifiant est mélangé au matériau de base, **caractérisée par le fait**
**qu'**un polymère de 3,6-diméthyl-1,4-dioxane-2,5-dion avec un degré de polymérisation de 700 à 15 000,
un copolyester aromatique aliphatique avec un réseau de base en tergal, des acides carboxyliques aliphatiques et des acides carboxyliques aromatiques *pour* augmenter l'allongement à la rupture de feuille adhésive et 6 - 20 % du poids d'un agrégat minéral pour régler les propriétés d'emboutissage de la feuille adhésive,
une masse adhésive, appliquée unilatéralement sur la feuille biodégradable, sous laquelle est glissée un agent améliorateur de l'adhérence pour permettre d'embobiner la feuille adhésive après séchage et refroidissement lors de la fabrication de balles de film, découpées ensuite en rouleaux de ruban adhésif.

2. Feuille adhésive biodégradable d'après l'une des revendications précédentes, **caractérisée par** d'autres agrégats, coupleurs, modificateurs et/ou plastificateurs.

3. Feuille adhésive biodégradable d'après l'une des revendications précédentes, **caractérisée par** du talc comme un agrégat minéral et/ou CaC03 comme autre agrégat minéral avec respectivement 6 - 10%.

4. Feuille adhésive biodégradable d'après l'une des revendications précédentes, **caractérisée par** une enduction de masse adhésive sur la base de latex naturel sous forme de lait de latex, qui est mélangé sur une base aqueuse avec du colophane, représentant des solides de 20 - 60 %.

5. Feuille adhésive biodégradable d'après l'une des revendications 1 à 4, **caractérisée par** une enduction de masse adhésive en copolyester aliphatique.

6. Feuille adhésive biodégradable d'après la revendication 6, **caractérisée en ce que** l'enduction de masse adhésive contient de l'huile de soja époxydée.

7. Feuille adhésive biodégradable d'après revendication 6 ou 7, **caractérisée en ce que** l'enduction de masse adhésive contient du DEG.

8. Feuille adhésive biodégradable d'après l'une des revendications précédentes, **caractérisée en ce que** la feuille adhésive est recouverte d'une couche antiadhérente de cires naturelles.
